# FASCICULE DE BREVET EUROPEEN

(11) **EP 0 568 399 B1**
(45) Date de publication et mention de la délivrance du brevet: **22.05.1996**
(21) Numéro de dépôt: 93400588.5
(22) Date de dépôt: 05.03.1993
(51) Int. Cl.: B62D 65/00

(54) **Dispositif pour le positionnement et le verrouillage en position d'une caisse de véhicule automobile sur une structure de manutention et structure de manutention**
Vorrichtung zur Positionierung und Verriegelung einer Kraftfahrzeugkarosserie auf einem Förderer und Förderer
Device for positioning and locking in position a vehicle body on a conveyor structure and conveyor structure

(30) Priorité: 27.04.1992 FR 9205174
(43) Date de publication de la demande: 03.11.1993
(73) Titulaire: AUTOMOBILES PEUGEOT, F-75116 Paris (FR); AUTOMOBILES CITROEN, F-92200 Neuilly sur Seine (FR)
(72) Inventeur: Renaud, Jean Paul, F-25550 Bavans (FR)
(74) Mandataire: Polus, Camille

(56) Documents cités:
- FR-A- 1 509 983
- GB-A- 1 208 297
- GB-A- 2 196 593
- US-A- 4 579 062
- US-A- 4 734 979

## Description

La présente invention concerne un dispositif pour le positionnement et le verrouillage en position d'un corps creux sur un support.

L'invention concerne plus particulièrement un dispositif pour le positionnement et le verrouillage d'une caisse de véhicule automobile sur une structure de manutention de la caisse du véhicule.

Dans le cycle de production industrialisée d'un véhicule automobile, il est nécessaire de pouvoir manipuler et transférer les caisses de véhicule notamment en vue de leur passage dans des installations de traitement des surfaces telles que par exemple des bains de dégraissage, de cataphorèse, de peinture, etc.

Pour leur transfert et leur passage dans ces installations, les caisses sont posées sur des structures comportant des longerons sur les faces supérieures desquelles prend appui le plancher de la caisse du véhicule.

Ces structures, également appelées luges, sont accrochées sur un convoyeur, notamment sur un convoyeur aérien, dont le profil permet de faire pénétrer les luges chargées des caisses dans les différents bains, de les y faire circuler et de les en faire ressortir.

Lors de ces opérations, il est bien entendu nécessaire d'assurer de manière la plus fiable possible un verrouillage en position des caisses sur les structures de support de manière que celles-ci ne basculent pas lors des phases de transfert et d'immersion.

Il est souhaitable de disposer un dispositif de conception simple et robuste qui permet d'assurer simultanément le positionnement et le verrouillage en position des caisses sur les structures de manutention.

Le document GB-A-1.208.297 propose un dispositif du type comportant au moins un pion de positionnement qui pénètre dans un trou correspondant du corps creux et des moyens de verrouillage, caractérisé en ce que les moyens de verrouillage comportent un organe de verrouillage intégré au pion de positionnement et par rapport auquel il est monté mobile entre une position de verrouillage dans laquelle une portion de l'organe de verrouillage s'étend à l'intérieur du corps creux en vis à vis d'une surface de butée et une position escamotée dans laquelle le pion de positionnement peut être dégagé du trou de positionnement, dans lequel la conception de l'organe de verrouillage est complexe et peu fiable.

Le document FR-A-1.509.983 propose de réaliser l'organe de verrouillage sous la forme d'un doigt coulissant mais il nécessite de disposer de trous de positionnement ayant une orientation inclinée par rapport à la verticale qui nuisent à la simplicité de conception du dispositif.

Afin de remédier à ces inconvénients l'invention propose un dispositif du type mentionné précédemment, caractérisé en ce que l'organe de verrouillage est un doigt de verrouillage qui est monté coulissant dans un perçage qui s'étend à travers le corps du pion de positionnement selon un axe incliné par rapport à l'axe du pion de manière que l'extrémité libre du doigt de verrouillage soit susceptible de se déplacer entre la position de verrouillage dans laquelle elle fait saillie par rapport à la surface périphérique du pion de positionnement et la position escamotée dans laquelle elle est en retrait à l'intérieur du perçage.

Selon d'autres caractéristiques de l'invention :
- le doigt de verrouillage se prolonge axialement par une queue d'actionnement qui fait saillie axialement à l'extérieur du perçage et du corps creux et qui est reliée a un mécanisme d'actionnement du doigt de verrouillage ;
- le mécanisme d'actionnement comporte un bras d'entraînement monté pivotant autour d'un axe perpendiculaire à l'axe de coulissement du doigt de verrouillage et dont l'extrémité libre est reliée à la queue d'actionnement du doigt de verrouillage ;
- la queue d'actionnement comporte deux collets espacés axialement entre lesquels est reçue l'extrémité libre du bras d'entraînement ;
- le bras d'entraînement est lié en rotation à deux branches de commande qui s'étendent dans un plan perpendiculaire à l'axe de pivotement du bras d'entraînement et entre lesquelles est reçue l'extrémité libre d'un levier de commande du premier type qui est monté articulé autour d'un axe parallèle à l'axe de pivotement du bras d'entraînement ;
- le pion de positionnement s'étend depuis une surface du dispositif perpendiculaire à l'axe du pion et contre laquelle prend appui axialement la portion de la paroi du corps creux dans laquelle est formé le trou de positionnement et qui entoure ce trou ;
- la paroi se prolonge axialement vers l'intérieur du corps creux par une virole cylindrique de guidage du pion de positionnement dont le bord annulaire d'extrémité constitue ladite surface de butée pour l'organe de verrouillage.

L'invention propose également une structure de support pour la manutention d'une caisse de véhicule automobile du type comportant des longerons sur les faces supérieures desquels prend appui le plancher de la caisse du véhicule, caractérisée en ce qu'elle comporte une pluralité de dispositifs de positionnement et de verrouillage réalisés conformément aux enseignements de l'invention et qui sont agencés de manière que les axes des pions de positionnement soient disposés en concordance avec les axes de trous de positionnement formés dans le plancher de la caisse du véhicule.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective illustrant une portion d'une caisse de véhicule automobile verrouillée en position sur une structure de manutention au moyen d'un dispositif de positionnement et de verrouillage réalisé conformément aux enseignements de l'invention ;
- la figure 2 est une vue du dispositif de verrouillage de la figure 1 en coupe transversale par un plan médian contenant les axes du pion de positionnement et du doigt de verrouillage ;
- la figure 3 est une vue similaire à celle de la figure 2 dans lequel le doigt de verrouillage est illustre en position escamotée.

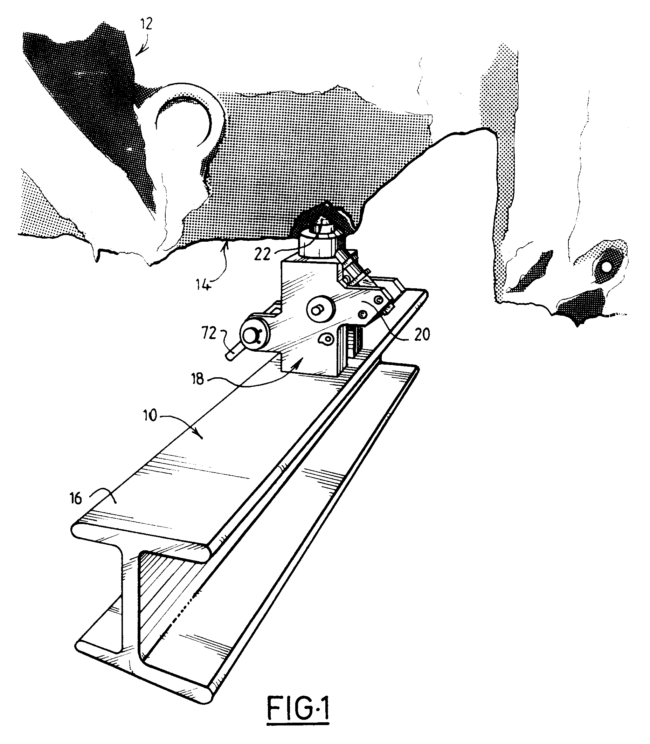

On reconnaît à la figure 1 un longeron 10 d'une structure de manutention d'une caisse 12 de véhicule automobile.

Le plancher 14 de la portion de la caisse 12 illustrée à la figure 1 prend appui indirectement sur la face supérieure 16 du longeron 10 et est positionné par rapport à celui-ci et verrouillé en position au moyen d'un dispositif de verrouillage 18 réalisé conformément aux enseignements de l'invention.

Le dispositif de positionnement et de verrouillage 18 est constitué pour l'essentiel par un corps ou bâti comportant deux plaques verticales parallèles 19 qui sont fixées sur la face supérieure 16 du longeron 10.

Les deux plaques 19 se prolongent à leur partie supérieure par un corps cylindrique 20 qui se prolonge axialement par un pion de positionnement 22.

Le pion 22 et le corps 20 possèdent un profil extérieur de révolution autour de l'axe X-X.

Le pion 22 comporte un premier tronçon cylindrique 24 qui est de diamètre réduit par rapport au corps 20 et qui définit avec ce dernier un épaulement radial d'appui 26.

Le tronçon cylindrique 24 du pion de positionnement 22 se termine axialement par une portion d'extrémité conique 28 qui facilite son introduction dans un trou de positionnement 30 formé dans le plancher 14.

Le trou de positionnement 30 est délimité par une virole cylindrique 38 qui s'étend axialement vers l'intérieur de la caisse du véhicule 12 depuis la tôle constitutive du plancher 14 et dont le diamètre intérieur est légèrement supérieur au diamètre extérieur du tronçon cylindrique 24 du pion de positionnement 22.

La caisse 12 est ainsi en appui indirect sur le longeron 10 par l'intermédiaire de l'épaulement radial 26 du corps cylindrique 20 du dispositif de positionnement et de verrouillage 18.

Conformément à l'invention, le dispositif 18 comporte un doigt de verrouillage 32.

Le doigt de verrouillage 32 est monté coulissant axialement dans un perçage étagé 34 formé en partie dans le corps cylindrique 20 et en partie dans le tronçon cylindrique 24 du pion de positionnement.

L'axe Y-Y du perçage 34 est incliné par rapport à l'axe X-X du pion de positionnement 22 et concourant avec cet axe.

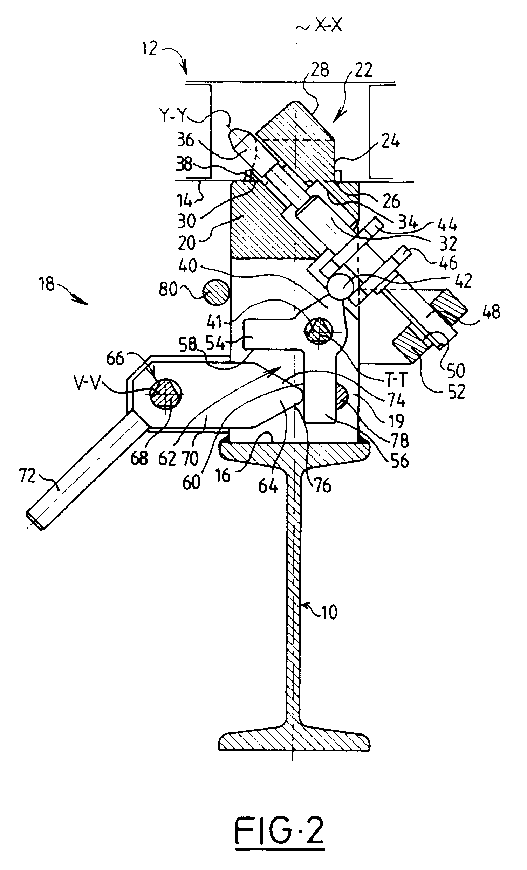

Dans la position verrouillée illustrée aux figures 1 et 2, l'extrémité libre 36 du doigt de verrouillage 32 fait saillie axialement au-delà de la surface périphérique de révolution du pion de positionnement 22 et s'étend à l'intérieur du corps creux en vis à vis du bord annulaire d'extrémité de la virole 38.

Dans cette position, et comme on peut le constater à la figure 2, l'extrémité 36 du doigt de verrouillage 32 assure l'immobilisation en position du corps creux 12 sur le pion de positionnement 22 car il est impossible de dégager ce dernier hors du corps creux 12.

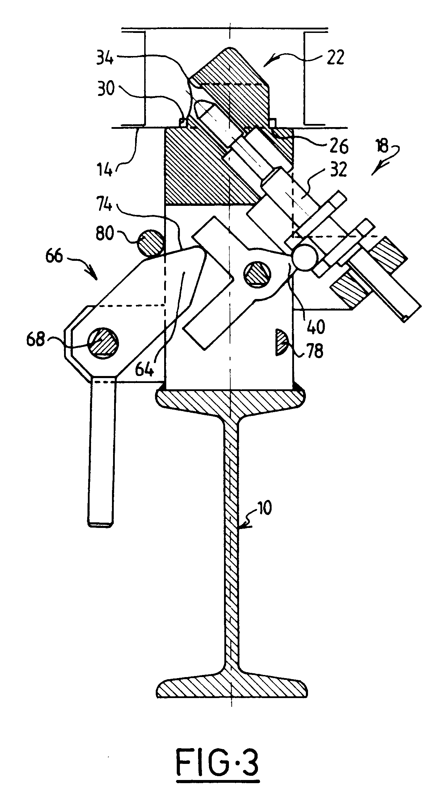

On décrira maintenant les moyens d'actionnement du doigt de verrouillage 32 entre sa position verrouillée illustrée à la figure 2 et sa position escamotée illustrée à la figure 3.

Les moyens d'actionnement du doigt de verrouillage 32 sont pour l'essentiel constitués par un bras d'entraînement 40 qui est monté pivotant autour d'un axe 41 dont l'axe géométrique T-T est perpendiculaire a l'axe X-X.

L'extrémité libre 42 du bras d'entraînement 40 est réalisée sous la forme d'une sphère qui est reçue entre deux collets 44 et 46 formés sur la queue d'actionnement 48 du doigt de verrouillage 32 et qui sont espacés axialement de manière à recevoir entre leurs faces radiales parallèles en vis à vis la sphère 42.

Le pivotement du bras d'entraînement 40 autour de l'axe 41 provoque le coulissement axial du doigt de verrouillage 32 dans le perçage 34 entre ses deux positions illustrées aux figures 2 et 3.

Le guidage du coulissement du doigt de verrouillage 32 est complété par un trou de guidage 50 traversé par la queue d'actionnement 48 et qui est formé dans une plaque transversale 52 qui s'étend entre les deux plaques 19.

Le bras d'entraînement 40 se prolonge, au-delà de l'axe de pivotement 41 par deux branches de commande 54 et 56 qui sont réalisées venues de matière avec le bras d'entraînement 40 et qui s'étendent dans un plan commun et perpendiculaire à l'axe T-T.

Les deux branches de commande 54 et 56 forment entre elles un angle droit et leurs faces latérales en vis a vis 58 et 60 définissent un logement 62 dans lequel est reçue l'extrémité libre 64 d'un levier de commande 66.

Le levier de commande 66 est un levier du premier type qui est monté articulé autour d'un axe géométrique U-U, parallèle à l'axe de pivotement T-T autour d'un axe 68.

Le premier bras 70 du levier 66 comporte l'extrémité libre de commande 64 tandis que son second bras 72 constitue une poignée de commande du dispositif de verrouillage 18.

A cet effet, l'extrémité libre 64 du levier de commande 66 est réalisée en pointe et est délimitée par deux faces de commande 74 et 76 qui forment entre elles un angle aigu et qui sont prévues pour coopérer respectivement avec les faces latérales 58 et 60 des branches de commande 54 et 56.

Les deux positions angulaires extrêmes entre lesquelles le bras d'entraînement 40 est susceptible de pivoter de 90° sont définies d'une part par une première butée fixe 78 avec laquelle coopère la branche de commande 56 et d'autre part par une seconde butée fixe 80 avec laquelle coopère la face 74 de l'extremité libre 64 du levier de commande 66 lorsque le dispositif 18 est dans sa position escamotée illustrée à la figure 3.

Le mécanisme d'actionnement constitué par le bras d'entraînement 40 et par le levier 66 permet d'une part d'assurer un déplacement axial important du doigt de verrouillage 32 en faisant pivoter le bras d'entraînement 40 de 45° au moyen du levier de commande 66 dont le pivotement autour de son axe 68 est aussi de 45°, la valeur de ces angles pouvant varier en fonction de la course recherchée pour le doigt 32.

De plus, cet agencement permet d'éviter les coincements du dispositif, notamment du fait du dépôt éventuel des produits de traitement de la caisse du véhicule et ceci compte tenu du fait de la faiblesse des aires des surfaces en contact des différents composants mobiles les uns par rapport aux autres.

Afin d'éviter encore les phénomènes de coincement par dépôt, on notera que les axes 41 et 68 et la queue d'actionnement 48 possèdent une section triangulaire reçue dans des trous cylindriques.

De plus, les différentes sections cylindriques du doigt de verrouillage 32 sont reçues dans des portions cylindriques correspondantes du perçage étagé 34 dont les diamètres sont plus grands de façon, ici encore, à limiter les problèmes de coincement par dépôt de produits.

L'utilisation du dispositif de verrouillage qui vient d'être décrit est particulièrement simple.

La mise en place d'une caisse de véhicule automobile sur une luge de manutention équipée de dispositifs de verrouillage conformes aux enseignements de l'invention s'effectuent lorsque les doigts de verrouillage 32 sont dans leur position escamotée illustrée à la figure 3.

A partir de cette position, on vient mettre le plancher 14 de la caisse du véhicule en appui contre les épaulements 26 des pions de positionnement 22 en assurant ainsi un positionnement précis de la caisse du véhicule sur la luge de manutention.

Il ne reste plus ensuite qu'à commander le verrouillage des doigts de verrouillage 32 en agissant sur les leviers de commande 66.

Selon un agencement qui n'est pas représenté sur les figures, il est possible de prévoir des moyens automatiques de commande simultanée des leviers de commande 66.

De plus, afin de conférer une grande souplesse d'adaptation des luges de manutention à différents modèles de caisse de véhicule, il est possible de prévoir que les dispositifs 18 sont fixés sur les longerons 10 par des moyens de fixation amovibles et réglables en position et ceci de façon à adapter les entraxes des pions de positionnement 22 à un motif d'entraxe des trous de positionnement 30 formés dans le plancher des caisses de véhicule.

## Revendications

1. Dispositif (18) pour le positionnement et le verrouillage en position d'un corps creux (12) sur un support (10), notamment d'une caisse de véhicule automobile sur une structure de manutention de la caisse du véhicule, du type comportant au moins un pion de positionnement (22, 24) qui pénètre dans un trou correspondant (30) du corps creux (12) et des moyens de verrouillage (32) qui comportent un organe de verrouillage (32) intégré au pion de positionnement (22) et par rapport auquel il est monté mobile entre une position de verrouillage dans laquelle une portion (36) de l'organe de verrouillage (32) s'étend à l'intérieur du corps creux (12) en vis à vis d'une surface (38) de butée et une position escamotée dans laquelle le pion de positionnement (22) peut être dégagé hors du trou de positionnement (30), caractérisé en ce que l'organe de verrouillage (32) est un doigt de verrouillage monté coulissant dans un perçage (34) qui s'étend à travers le corps (24) du pion de positionnement (22) selon un axe (Y-Y) incliné par rapport à l'axe (X-X) du pion de positionnement de manière que l'extrémité libre (36) du doigt de verrouillage (32) soit susceptible de se déplacer entre la position de verrouillage dans laquelle elle fait saillie par rapport à la surface périphérique du pion de positionnement (22) et la position escamotée dans laquelle elle est en retrait à l'intérieur du perçage (34).

2. Dispositif selon la revendication 1, caractérisé en ce que le doigt de verrouillage (32) se prolonge axialement par une queue d'actionnement (48) qui fait saillie axialement à l'extérieur du perçage (34) et du corps creux (12) et qui est reliée à un mécanisme d'actionnement du doigt de verrouillage (32).

3. Dispositif selon la revendication 2, caracterise en ce que le mécanisme d'actionnement comporte un bras d'entraînement (40) monté pivotant autour d'un axe (T-T) perpendiculaire a l'axe de coulissement (Y-Y) du doigt de verrouillage (32) et dont l'extrémité libre (42) est reliée a la queue d'actionnement (48) du doigt de verrouillage (32).

4. Dispositif selon la revendication 3, caractérise en ce que la queue d'actionnement (48) comporte deux collets (44, 46) espacés axialement entre lesquels est reçue l'extrémité libre (42) du bras d'entraînement (40).

5. Dispositif selon la revendication 4, caractérise en ce que le bras d'actionnement (40) est lié en rotation a deux branches de commande (54, 56) qui s'étendent dans un plan perpendiculaire à l'axe de pivotement du bras d'entraînement (40) et entre lesquelles est reçue l'extrémité libre (64) d'un levier de commande (66) qui est monté articulé autour d'un axe (U-U) parallèle à l'axe de pivotement (T-T) du bras d'entraînement (40).

6. Dispositif selon l'une quelconque des revendications précédentes, caractérisé en ce que le pion de positionnement (22) s'étend depuis une surface (26) du dispositif perpendiculaire à l'axe du pion (X-X) et contre laquelle prend appui axialement la portion de la paroi (14) du corps creux dans laquelle est formé le trou de positionnement (30) et qui entoure ce trou.

7. Dispositif selon la revendication 6, caractérisé en ce que ladite paroi (14) se prolonge axialement vers l'intérieur du corps creux (12) par une virole cylindrique (30) de guidage du pion de positionnement (22) dont le bord annulaire d'extrémité (38) constitue ladite surface de butée pour l'organe de verrouillage (32).

8. Structure de support pour la manutention d'une caisse de véhicule automobile, du type comportant des longerons (10) sur les faces supérieures (16) desquelles prend appui le plancher (14) de la caisse du véhicule, caracterisée en ce qu'elle comporte une pluralité de dispositifs de positionnement et de verrouillage (18) réalisés conformément à l'une quelconque des revendications précédentes et qui sont agencés de manière que les axes (X-X) des pions de positionnement (22) soient disposés en concordance avec les axes de trous (30) de positionnement formés dans le plancher (14) de la caisse du véhicule.

## Claims

1. Device (18) for positioning a hollow body (12) on a support (10) and locking it in position, notably for positioning and securing the chassis of a motor vehicle on a handling structure for the vehicle chassis, of the type comprising at least one positioning stud (22, 24) which engages in a corresponding hole (30) in the hollow body (12) and locking means (32) which comprise a locking member (32) integral with the positioning stud (22) and relative to which it is mounted to be movable between a locking position in which a portion (36) of the locking member (32) extends inside the hollow body (12) opposite an abutment surface (38) and a retracted position in which the positioning stud (22) can be disengaged from the positioning hole (30), characterised in that the locking member (32) is a locking finger slidably mounted in a bore (34) extending through the body (24) of the positioning stud (22) along an axis (Y-Y) inclined relative to the axis (X-X) of the positioning stud so that the free end (36) of the locking finger (32) is capable of moving between the locking position in which it projects relative to the peripheral surface of the positioning stud (22) and the retracted position in which it is withdrawn inside the bore (34).

2. Device according to claim 1, characterised in that the locking finger (32) is extended axially by an actuating stem (48) which projects axially outside the bore (34) and the hollow body (12) and which is connected to an actuating mechanism for the locking finger (32).

3. Device according to claim 2, characterised in that the actuating mechanism comprises a drive arm (40) pivotally mounted about an axis (T-T) perpendicular to the sliding axis (Y-Y) of the locking finger (32), the free end (42) thereof being connected to the actuating stem (48) of the locking finger (32).

4. Device according to claim 3, characterised in that the actuating stem (48) comprises two axially spaced flanges (44, 46) between which is accommodated the free end (42) of the drive arm (40).

5. Device according to claim 4, characterised in that the actuating arm (40) is connected for rotation to two control branches (54, 56) which extend in a plane perpendicular to the pivot axis of the drive arm (40) and between which is accommodated the free end (64) of a control lever (66) which is mounted to articulate about an axis (U-U) parallel to the pivot axis (T-T) of the drive arm (40).

6. Device according to any one of the preceding claims, characterised in that the positioning stud (22) extends from a surface (26) of the device perpendicular to the axis of the stud (X-X) and against which abuts axially the portion of the wall (14) of the hollow body in which the positioning hole (30) is formed and which surrounds this hole.

7. Device according to claim 6, characterised in that the wall (14) is extended axially towards the inside of the hollow body (12) by a cylindrical guide collar (30) tor the positioning stud (22), the annular end edge (38) of which constitutes the abutment surface for the locking member (32).

8. Support structure for handling a motor vehicle chassis, of the type comprising girders (10) on whose upper surfaces (16) the floor (14) of the vehicle chassis abuts, characterised in that it comprises a plurality of positioning and locking devices (18) constructed according to any one of the preceding claims, which are arranged so that the axes (X-X) of the positioning studs (22) coincide with the axes of the positioning holes (30) formed in the floor (14) of the vehicle chassis.

## Patentansprüche

1. Vorrichtung (18) zur Positionierung und Verriegelung in Stellung eines Hohlkörpers (12) auf einem Träger (10), insbesondere einer Kraftfahrzeugkarosserie auf einer Konstruktion zur Handhabung der Karosserie, des Typs, der mindestens einen Positionierungsstift (22, 24) aufweist, der in ein entsprechendes Loch (30) des Hohlkörpers (12) eindringt, und Verriegelungsmittel (32), die ein Verriegelungsorgan (32) aufweisen, das in den Positionierungsstift (22) eingebaut ist, und relativ zu dem es zwischen einer Verriegelungsstellung, in der ein Teil (36) des Verriegelungsorgans (32) ins Innere des Hohlkörpers (12) einer Anschlagfläche (38) gegenüber hineinragt, und einer eingezogenen Stellung, in der der Positionierungsstift (22) aus dem Positionierungsloch (30) befreit werden kann, beweglich ist, dadurch gekennzeichnet, daß das Verriegelungsorgan (32) ein Riegelfinger ist, der in einer Bohrung (34) gleitend montiert ist, die sich durch den Körper (24) des Positionierungsstiftes (22) einer Achse (Y-Y) entlang erstreckt, die relativ zur Achse (X-X) des Positionierungsstiftes derart geneigt ist, daß das freie Ende (36) des Riegelfingers (32) in der Lage ist, sich zwischen der Verriegelungsstellung, in der es aus der Oberfläche des Positionierungsstiftes (22) hervorragt, und der eingezogenen Stellung, in der es ins Innere der Bohrung (34) zurückweicht, zu bewegen.

2. Vorrichtung nach Patentanspruch 1, dadurch gekennzeichnet, daß der Riegelfinger (32) sich axial in einem Betätigungsende (48) fortsetzt, das axial aus der Bohrung (34) und dem Hohlkörper (12) herausragt und mit einem Mechanismus zur Betätigung des Riegelfingers (32) verbunden ist.

3. Vorrichtung nach Patentanspruch 2, dadurch gekennzeichnet, daß der Betätigungsmechanismus einen Antriebsarm (40) aufweist, der um eine Achse (T-T) kippbar montiert ist, die auf der Gleitachse (Y-Y) des Riegelfingers (32) senkrecht steht, und dessen freies Ende (42) mit dem Betätigungsende (48) des Riegelfingers (32) verbunden ist.

4. Vorrichtung nach Patentanspruch 3, dadurch gekennzeichnet, daß das Betätigungsende (48) zwei Kragen (44, 46) aufweist, die in Achsenrichtung mit Abstand voneinander angeordnet sind, zwischen die das freie Ende (42) des Antriebsarmes (40) aufgenommen wird.

5. Vorrichtung nach Patentanspruch 4, dadurch gekennzeichnet, daß der Betätigungsarm (40) mit zwei Steuerschenkeln (54, 56) zur gleichzeitigen Rotation verbunden ist, die in einer zur Kippachse des Antriebsarmes (40) senkrechten Ebene liegen und zwischen die das freie Ende (64) eines Steuerhebels (66) aufgenommen wird, der um eine Achse (U-U) schwenkbar montiert ist, die zur Kippachse (T-T) des Antriebsarmes (40) parallel ist.

6. Vorrichtung nach irgendeinem der vorangehenden Patentansprüche, dadurch gekennzeichnet, daß der Positionierungsstift (22) von einer Oberfläche (26) der Vorrichtung absteht, die auf der Achse des Stiftes (X-X) senkrecht steht und auf der der Teil der Wand (14) des Hohlkörpers axial ruht, in dem das Positionierungsloch (30) ausgebildet ist, und die dieses Loch umgibt.

7. Vorrichtung nach Patentanspruch 6, dadurch gekennzeichnet, daß sich die genannte Wand (14) axial ins Innere des Hohlkörpers (12) in einem zylindrischen Ring (30) zur Führung des Positionierungsstiftes (22) fortsetzt, dessen ringförmiger Endrand (38) die genannte Anschlagfläche für das Verriegelungsorgan (32) darstellt.

8. Tragekonstruktion zur Handhabung einer Kraftfahrzeugkarosserie, des Typs, der Träger (10) aufweist, auf deren oberen Flächen (16) der Boden (14) der Karosserie ruht, dadurch gekennzeichnet, daß sie eine Vielzahl von Positionierungs- und Verriegelungsvorrichtungen (18) aufweisen, die irgendeinem der vorangehenden Patentansprüche gemäß ausgebildet sind und die derart angeordnet sind, daß die Achsen (X-X) der Positionierungsstifte (22) mit den Achsen der Positionierungslöcher (30) in Übereinstimmung angeordnet sind, die im Boden der Karosserie ausgebildet sind.
